# EUROPÄISCHE PATENTSCHRIFT

(11) **EP 3 375 087 B1**
(45) Veröffentlichungstag und Bekanntmachung des Hinweises auf die Patenterteilung: **15.09.2021**
(21) Anmeldenummer: 17797142.1
(22) Anmeldetag: 08.11.2017
(51) Int. Cl.: H02P 27/08, H03K 5/13, H03K 5/156

(54) **SCHNITTSTELLE**
INTERFACE
INTERFACE

(30) Priorität: 10.11.2016 DE 102016121557
(43) Veröffentlichungstag der Anmeldung: 19.09.2018
(73) Patentinhaber: ebm-papst Mulfingen GmbH & Co. KG, 74673 Mulfingen (DE)
(72) Erfinder: ECCARIUS, Michael, 74673 Mulfingen-Jagstberg (DE); WYSTUP, Ralph, 74653 Künzelsau (DE)
(74) Vertreter: Staeger & Sperling Partnerschaftsgesellschaft mbB
(86) Internationale Anmeldenummer: PCT/EP2017/078671
(87) Internationale Veröffentlichungsnummer: WO 2018/087187

(56) Entgegenhaltungen:
- DE-A1-102014 225 876
- GB-A- 2 146 205

## Beschreibung

Die Erfindung betrifft ein Verfahren zum Übertragen sowohl von Sollwerten als auch von veränderlichen Parametrierungswerten zum Parametrieren eines Elektromotors.

Um Elektromotoren, wie zum Beispiel elektronisch kommutierte Elektromotoren anzusteuern, werden Motorsteuerungen eingesetzt. Motorsteuerungen sind aus der Praxis hinlänglich bekannt und werden daher im Folgenden nicht näher beschrieben. Diese Motorsteuerungen erzeugen aus einer eingangsseitigen Gleich- oder Wechselspannung eine Spannung zum Ansteuern des Elektromotors. Dabei kann die Motorsteuerung z. B. im Gehäuse des betreffenden Motors integriert sein, so dass der Motor insgesamt als autarke Einheit durch einen Anwender eingesetzt werden kann.

Es ist ferner bekannt, dass solche Motoren mit integrierter Elektronik bei Ventilatoren Einsatz finden. Speziell bei diesen Motoren ist bei der Errichtung und im Betrieb die Zugänglichkeit stark eingeschränkt und sind bauliche und räumliche Randbedingungen zu berücksichtigen.

Es ist weiter bekannt, dass die Drehzahlvorgabe eines Motors mittels eines Stellsignals, dass typischerweise als analoges Sollwertsignal an die Motorsteuerung gegeben wird, umgesetzt wird. Ein derartiges Stellsignal kann beispielsweise ein definierter Spannungswert sein.

Ein weiteres Bedürfnis, die an Motorsteuerungen regelmäßig gestellt werden, ist die Möglichkeit über Parametereingaben die Betriebsmodi bzw. das Betriebsverhalten des angeschlossenen Motors einzustellen. Für eine solche Parametrierung ist eine Kommunikationsschnittstelle erforderlich, die ferner auch für das Einspielen von Steuerungssoftware verwendet wird.

Um die Parametrierung auch am Einbauort auf die Kundenanforderungen und die Betriebsumgebung optimal anpassen oder auch zu gegebener Zeit ändern zu können, ist eine Zugänglichkeit der Kommunikationsschnittstelle notwendig.

Von Nachteil ist dabei, dass mit der Zugänglichkeit der Kommunikationsschnittstelle auch zusätzliche Anschlussleitungen zur Kommunikationsschnittstelle erforderlich sind, so dass ein erhöhter Montageaufwand bei den im Stand der Technik bekannten Lösungen erforderlich ist. Bei gewissen Applikationen, wie z. B. Ventilatoren in Geräten oder umhausten Anlagen ist eine einfache Zugänglichkeit nicht gegeben.

Das Vorsehen von Anschlussleitungen zur Kommunikationsschnittstelle erzeugt demzufolge einen zusätzlichen Installationsaufwand und Bauraumbedarf.

Aus der DE 10 2014 225 876 A ist eine Lösung bekannt, bei der eine Eingangsstufe für eine Motorsteuerung, insbesondere eine Motorsteuerung für einen Elektromotor vorgesehen wird, wobei die Eingangsstufe einen Eingang zum Eingeben eines Eingangssignals und einen Ausgang zum Verbinden mit der Motorsteuerung aufweist, wobei die Eingangsstufe dazu ausgebildet ist, aus einem Eingangssignal zwischen einer ersten unteren und einer zweiten oberen Spannung ein Stellsignal zu erzeugen und das Stellsignal als Sollwertvorgabe über den Ausgang an die Motorsteuerung auszugeben, wobei das empfangenen Stellsignal einen mit der Motorsteuerung verbundenen Motor derart ansteuert, dass ein in dem Stellsignal kodierter Sollwert zumindest annährend eingehalten ist. Bei der bekannten Eingangsstufe wird ausgenutzt, dass zur Vorgabe eines Sollwerts üblicherweise ein Eingangssignal zwischen der genannten ersten und zweiten Spannung liegt, so dass üblicherweise in einem normalen Betrieb das Eingangssignal die zweite Spannung nicht oder zumindest nicht wesentlich überschreitet. Dieser Umstand kann dazu genutzt werden, dass das Übertragen eines Kommunikationssignals mit einer Spannung oberhalb einer ersten Schwellenspannung signalisiert wird, wobei diese Schwellenspannung größer als die genannte zweite Spannung ist. Notwendig ist, dass die Eingangsstufe und/oder die Motorsteuerung die höhere Eingangsspannung geeignet verarbeiten kann.

Allerdings besteht das Problem, dass die höhere Eingangsspannung ohne geeignete Maßnahmen zu einer Zerstörung der Elektronik oder Teile davon Führen könnte, so dass es wünschenswert ist, die Spannung nicht über den Wert der Spannungsgrenze der genannten oberen Spannung zu führen.

Aus der GB 2 146 205 A ist eine Schaltungsanorndung bekannt, bei der ein Jitter-Generator bei der Datenübertragung verwendet wird.

Aus der US 5361025A ist eine alternative Lösung einer Schnittstellenschaltung bekannt, welche einen einzigen Eingangsanschluss, sowohl zum Empfangen eines analogen oder digitalen Steuersignals ausgebildet ist, das die erforderliche Drehzahl des Motors definiert. Die Art des Eingangssignals wird mittels Komparatorschaltungen erkannt. Das Eingangssignal wird entsprechend seiner Natur unterschiedlich verarbeitet, um auf jeden Fall ein von der Regel- und Steuerschaltung akzeptables analoges Signal auszugeben, welches den Motor steuert.

Der vorliegenden Erfindung liegt daher die Aufgabe zugrunde, vorbesagte Nachteile zu überwinden und eine Lösung zum Parametrieren vorzusehen, die kostengünstig umsetzbar ist, bauraumoptimiert realisiert werden kann und eine zuverlässige Parametrierung des Motors mit möglichst niedrigem Installationsaufwand und niedrigen Kosten ermöglicht.

Diese Aufgabe wird durch die Merkmalskombination gemäß Patentanspruch 1 gelöst.

Ein Grundgedanke der vorliegenden Erfindung liegt darin, dass eine einzige Schnittstelle der Motorsteuerung dazu verwendet wird, um einerseits die Sollwertsignale zu übertragen und andererseits die Parametrierung des Motors vorzunehmen, ohne dass es einer zusätzlichen Kommunikationsschnittstelle bedarf.

Hierzu ist vorgesehen die betreffende Schnittstelle als PWM-Schnittstelle (Pulsweitenmodulations-Schnittstelle) auszubilden, an die die Sollwertsignale mittels eines PWM-Signals übertragen werden. Der betreffende Eingang ist ein PWM Eingang. Das Sollwertsignal wird als PWM-Signal eingespeist.

Hierzu ist vorgesehen, dass aus dem PWM-Signal zur Sollwertvorgabe ein Taktsignal generiert wird. Ein Signal mit dem binären Parametrierungsprotokoll wird als Phasenjitter (Versatz) auf das PWM-Signal aufgesetzt. Am Eingang der Schnittstelle wird der entweder positive oder negative Versatz detektiert und als 0 oder 1 gegenüber dem Referenzsignal ausgewertet.

Als Jitter bezeichnet man das zeitliche Taktzittern bei der Übertragung von Digitalsignalen. Ein Jitter ist als Störsignal im Normalfall unerwünscht und man versucht solche Störsignale durch Jitterbuffer zu unterbinden. Vorliegend wird ein Phasenjitter aber dazu verwendet, das Sollwertsignal bewußt zu stören. Mit der Überlagerung des Sollwertsignals mit einem Phasenjitter kommt es zu gezielten Verschiebung um die Phasenlage. Der Jitter ist die erste Ableitung einer Verzögerung (engl. Delay). Die spektrale Darstellung der zeitlichen Abweichungen wird als Phasenrauschen bezeichnet.

Es wurde erkannt, dass dennoch das mit dem Phasenjitter überlagerte Sollwertsignal das arithmetische Mittel des PWM-Signals nicht verändert. Da das PWM-Signal im arithmetischen Mittel somit gleich bleibt kann es gleichzeitig als Sollwert-Signal benutzt werden.

Das pulsweitenmoduliertes Signal wird beispielsweise erzeugt, indem ein linear an- oder absteigendes Signal (Dreieck- oder Sägezahnspannung) mit dem analogen Eingangssignal verglichen wird, das je nach seinem Wert eine kurze oder eine lange Zeit über diesem liegt. An den Schnittpunkten wird das Ausgangssignal zwischen zwei Logikpegeln umgeschaltet. Es hat damit wie ein Digitalsignal den Vorteil, dass es nur zwei diskrete Werte annehmen kann, ist aber in seinem Tastgrad stufenlos von 0% bis 100% veränderbar, d. h. nicht zeitdiskret.

Zur Erzeugung eines PWM-Signals aus digital vorliegenden Daten (z. B.: Motorsteuerung) kommen geeignete Zähler/Komparatorschaltungen zum Einsatz. Viele Mikrocontroller enthalten bereits direkt PWM-Module oder unterstützen durch geeignete Timer-Funktionen deren Implementierung.

Es sind zur Realisierung der vorliegenden Erfindung jedoch PWM-Signale mit einem Tastgrad von 0% und 100% auszuschließen, da es in diesen Fällen keine Flanken gäbe, die in positiver oder negativer Phasenlage durch das Phasenjitter beeinflussbar wären. Der Tastgrad von 100% entspricht einer Gleichspannung mit dem Spannungssollwert für das Sollwertsignal.

Es wird demnach ein Verfahren zum Übertragen sowohl von Sollwerten "S" mittels Sollwertsignalen als auch von Parametrierungswerten "P" mittels Parametrierungssignalen zum Parametrieren eines Elektromotors, insbesondere eines EC-Motors über ein und dieselbe Schnittstelle einer Motorsteuerung vorgeschlagen, indem ein einen Sollwert repräsentierendes PWM-Signal mittels eines Phasenjitters überlagert wird, und das mit dem Phasenjitter überlagerte (veränderte) PWM-Signal über eine Eingangsstufe der Schnittstelle der Motorsteuerung zugeführt wird, wobei das arithmetische Mittel des überlagerten (veränderten) PWM-Signals dem Sollwert "S" entspricht.

In einer vorteilhaften Ausgestaltung der Erfindung ist vorgesehen, dass die Phasenlage des überlagerten PWM-Signals gegenüber der Phasenlage des PWM-Signals bestimmungsgemäß verändert ist. Hierzu kann insbesondere vorgesehen werden, dass ein binäres Parametrisierungsprotokoll zur Parametrierung des Elektromotors verwendet wird und die binären Werte "0" und "1" dieses Protokolls mittels des Phasenjitter realisiert werden indem die Phasenlage des überlagerten PWM-Signals so beinflusst wird, dass die Phasenlage entweder als "0" oder "1" in der Eingangsstufe detektiert wird. Der Eingang detektiert insofern den "Versatz" und wertet diesen als 0 oder 1 gegenüber dem Referenzsignal aus.

Es ist in einer bevorzugten Ausgestaltung der Erfindung vorgesehen, dass das binäre Parametrisierungsprotokoll zur binären Parametrisierung dadurch realisiert ist, dass eine in der Phasenlage zeitlich voreilende Flanke eines Pulses (Signalflanke) des überlagerten PWM-Signals in Bezug auf ein unverändertes Sollwertsignal als Wert "0" detektiert wird, während eine in der Phasenlage zeitlich nacheilende Flanke eines Pulses des überlagerten PWM-Signals als Wert "1" detektiert wird.

Weiter vorteilhaft ist es, wenn innerhalb einer Signalfolge von PWM-Signalen eine bestimmte Anzahl von n-Pulsen (U_{PWM}) im überlagerten PWM-Signals in der Phasenlage zeitlich voreilen, während eine bestimmte Anzahl von n'-Pulsen im überlagerten PWM-Signals in der Phasenlage zeitlich nacheilen, bzw. wenn jeweils Signalfolgen mit voreilenden und/oder nacheilenden PWM-Pulsen aufeinanderfolgen, so dass auf diese Weise binäre Protokolle übertragen werden können.

In einer alternativen Ausführungsform kann vorgesehen sein, dass nicht die jeweilige Flanke des überlagerten PWM-Signals entweder voreilt oder nacheilt, sondern das PWM-Signal so verändert wurde, sondern ein zeitlicher Versatz der PWM-Flanken durch eine longitudinale Phasenmodulation erfolgt, wobei Periodendauer und Tastgrad entsprechend dem zu übertragenden Wert angepasst sein müssen.

Dabei wird weiter genutzt, dass bei der gewählten Veränderung des PWM-Signals das arithmetische Mittel des überlagerten (veränderten) PWM-Signa!s mit dem arithmetischen Mittel des ursprünglichen PWM-Signals (Referenzsignals) übereinstimmt.

Mit Vorteil ist weiter vorgesehen, dass die Periodendauer des überlagerten PWM-Signals (PWMj) mit der Periodendauer des PWM-Signals (PWM) übereinstimmt.

Der Tastgrad des PWM-Signals wird mit Vorteil als Wert außerhalb der beiden Werte 0% und 100% gewählt, somit größer als 0% und kleiner als 100%, um sicherzustellen, dass detektierbare Flanken der PWM-Signale vorhanden sind.

Ein weiterer Aspekt der vorliegenden Erfindung liegt in der Prüfbarkeit des Verfahrens indem die Prüfsumme des binären Parametrisierungsprotokoll aus dem überlagerten PWM-Signal ermittelt wird und mit einem Prüfsummensollwert verglichen wird. Hierdurch können Übertragungsfehler detektiert und je nach Prüfsummenalgorithmus auch korrigiert werden. Durch die Nutzung einer Prüfsumme im binären per Jitter aufmodulierten Protokoll können somit Übertragungsfehler eliminiert werden.

Es ist in einer weiteren vorteilhaften Ausgestaltung der Erfindung vorgesehen, dass das PWM-Signal in regelmäßigen definierten Abständen rekalibriert wird, so dass dauerhaft ein kalibriertes Referenzsignal zur Verfügung steht.

Andere vorteilhafte Weiterbildungen der Erfindung sind in den Unteransprüchen gekennzeichnet.

Es zeigen:
- Fig. 1: eine schematische Ansicht einer Schnittstelle einer Motorsteuerung;
- Fig. 2: ein PWM-Referenzsignal und ein Phasenjitter-überlagertes PWM-Signal und
- Fig. 3: eine alternative Signalfolge eines Phasenjitter-überlagerten PWM-Signals.

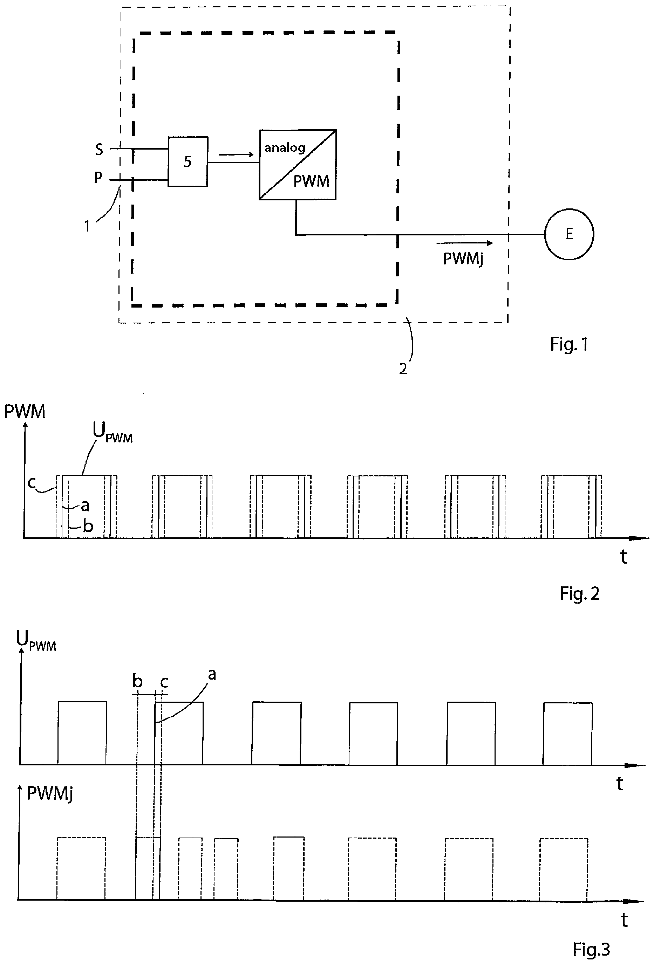

Im Folgenden werden die Weiterbildungen und bevorzugten Ausführungsformen der Erfindung mit Bezug auf die Figuren 1 bis 3 näher erläutert, wobei gleiche Bezugszeichen auf gleiche funktionale und/oder strukturelle Merkmale hinweisen.

In der Figur 1 ist eine schematische Ansicht einer Schnittstelle 1 einer Motorsteuerung 2 gezeigt. Diese Schnittstelle dient zum Übertragen sowohl von Sollwerten S mittels Sollwertsignalen als auch von Parametrierungswerten P mittels Parametrierungssignalen zum Parametrieren eines Elektromotors E, insbesondere eines EC-Motors über ein und dieselbe Schnittstelle 1 der Motorsteuerung 2. Insofern bedarf es keiner zweiten, insbesondere zusätzlichen Kommunikationsschnittstelle. Ferner ist ein Prüfsummen-Controller 5 vorgesehen zum Ermitteln einer Prüfsumme der phasenmodulierten codierten Bits des veränderten PWM-Signals PWMj.

Als Sollwert kann eine Spannung zwischen 0V und 10V dienen, was einem PWM-Tastgrad vpn 0 bis 100% entspricht.

Um gleichzeitig, neben dem Sollwert S für die Drehzahl, auch Parametrierungswerte P zum zum Parametrieren eines Elektromotors E über die Schnittstelle 1 an die Motorsteuerung zu übermitteln, wird das PWM-Signal "PWM" mittels eines Phasenjitters überlagert. Das Phasenjitter ist dabei ein Störsignal, welches die Phasenlage des PWM-Signals beeinflusst, wie dies in den Figuren 2 und 3 zu sehen ist.

In der Figur 2 ist ein PWM-Signal "PWM" als Referenzsignal (Kurve a) dargestellt, welches den Sollwert repräsentiert, der sich aus Tastgrad und Periodendauer ergibt. Ohne jedoch den Tastgrad und die Periodendauer zu verändern, wird das PWM-Signal "PWM" durch das Phasenjitter entweder mit einem zeitlich vorlaufenden Versatz (Kurve b) oder einem zeitlich nachlaufenden Versatz (Kurve c) verschoben, wobei aber jeweils das arithmetische Mittel des überlagerten PWM-Signals PWMj dem Sollwert S entspricht. Anders ausgedrückt zeigt die Figur 2 ein Beispiel für phasenmodulierte codierte Bits mittels einer Phasenverschiebung des PWM-Signals.

In der Figur 3 ist ein alternatives Ausführungsbeispiel überlagerter PWM-Signale "PWMj" gezeigt (unterhalb der Kurve a in einer isolierten Darstellung). Wie dort zu erkennen ist, wurde eine longitudinale Phasenmodulation eines PWM-Signals vorgenommen. Ebenfalls ersichtlich sind die Kurven a, b und c, welche jeweils das Referenzsignal und die nachlaufenden und vorlaufenden Flanken darstellen.

## Patentansprüche

1. Verfahren zum Übertragen sowohl von Sollwerten (S) mittels Sollwertsignalen als auch von Parametrierungswerten (P) mittels Parametrierungssignalen zum Parametrieren eines Elektromotors, über ein und dieselbe Schnittstelle (1) einer Motorsteuerung (2), **dadurch gekennzeichnet, dass** ein einen Sollwert repräsentierendes PWM-Signal (PWM) mittels eines Phasenjitters überlagert wird, und das mit dem Phasenjitter überlagerte PWM-Signal (PWMj) über eine Eingangsstufe der Schnittstelle (1) der Motorsteuerung (2) zugeführt wird, wobei das arithmetische Mittel des überlagerten PWM-Signals (PWMj) dem Sollwert (S) entspricht.

2. Verfahren nach Anspruch 1, **dadurch gekennzeichnet, dass** die Phasenlage des überlagerten PWM-Signals (PWMj) gegenüber der Phasenlage des PWM-Signals (PWM) verändert ist.

3. Verfahren nach Anspruch 1 oder 2, **dadurch gekennzeichnet, dass** ein binäres Parametrisierungsprotokoll zur Parametrierung des Elektromotors verwendet wird und die binären Werte "0" und "1" dieses Protokolls mittels des Phasenjitter realisiert werden indem die Phasenlage des überlagerten PWM-Signals (PWMj) so beinflusst wird, dass die Phasenlage entweder als "0" oder "1" in der Eingangsstufe detektiert wird.

4. Verfahren nach Anspruch 3, wobei das binäre
Parametrisierungsprotokoll zur binären Parametrisierung dadurch realisiert ist, dass eine in der Phasenlage zeitlich voreilende Flanke eines Pulses (U_{PWM}) des überlagerten PWM-Signals (PWMj) in Bezug auf ein unverändertes Sollwertsignal als Wert "0" detektiert wird, während eine in der Phasenlage zeitlich nacheilende Flanke eines Pulses (U_{PWM}) des überlagerten PWM-Signals (PWMj) als Wert "1" detektiert wird.

5. Verfahren nach Anspruch 4, wobei eine bestimmte Anzahl von n-Pulsen (U_{PWM}) im überlagerten PWM-Signals (PWMj) in der Phasenlage zeitlich voreilen, während eine bestimmte Anzahl von n'-Pulsen (U_{PWM}) im überlagerten PWM-Signals (PWMj) in der Phasenlage zeitlich nacheilen.

6. Verfahren nach einem der vorhergehenden Ansprüche, **dadurch gekennzeichnet, dass** das arithmetische Mittel des überlagerten PWM-Signals (PWMj) mit dem arithmetischen Mittel des PWM-Signals (PWM) übereinstimmt.

7. Verfahren nach einem der vorhergehenden Ansprüche, **dadurch gekennzeichnet, dass** die Periodendauer des überlagerten PWM-Signals (PWMj) mit der Periodendauer des PWM-Signals (PWM) übereinstimmt.

8. Verfahren nach einem der vorhergehenden Ansprüche, **dadurch gekennzeichnet, dass** der Tastgrad des PWM-Signals (PWM) größer 0% und kleiner als 100% ist.

9. Verfahren nach einem der vorhergehenden Ansprüche, **dadurch gekennzeichnet, dass** eine Prüfsumme des binären Parametrisierungsprotokoll aus dem überlagerten PWM-Signal (PWMj) ermittelt wird und mit einem Prüfsummensollwert verglichen wird.

10. Verfahren nach einem der vorhergehenden Ansprüche, **dadurch gekennzeichnet, dass** das PWM-Signal (PWM) in regelmäßigen definierten Abständen rekalibriert wird.

## Claims

1. A method for transmitting, via one and the same interface (1) of a motor controller (2), both setpoints (S) by means of setpoint signals and parameterization values (P) by means of parameterization signals for parameterizing an electric motor,
**characterized in that** a PWM signal representing a setpoint (PWM), is superposed by means of a phase jitter, and the PWM signal (PWMj) superposed with the phase jitter is fed to the motor controller (2) via an input stage of the interface (1), the arithmetic mean of the superposed PWM signal (PWMj) corresponding to the setpoint (S).

2. The method as set forth in claim 1, **characterized in that** the phase angle of the superposed PWM signal (PWMj) is changed relative to the phase angle of the PWM signal (PWM).

3. The method as set forth in claim 1 or 2, **characterized in that** a binary parameterization protocol is used to parameterize the electric motor, and the binary values "0" and "1" of this protocol are implemented using phase jitter by influencing the phase angle of the superposed PWM signal (PWMj) such that the phase angle is detected either as "0" or "1" in the input stage.

4. The method as set forth in claim 3, wherein the binary parameterization protocol for binary parameterization is implemented by having a temporally leading edge of a pulse (U_{PWM}) of the superposed PWM signal (PWMj) relative to an unchanged setpoint signal be detected as the value "0" in the phase angle, whereas a temporally trailing edge of a pulse (U_{PWM}) of the superposed PWM signal (PWMj) is detected as the value "1."

5. The method as set forth in claim 4, wherein a defined number of n pulses (U_{PWM}) in the superposed PWM signal (PWMj) lead in time in the phase angle, whereas a defined number of n 'pulses (U_{PWM}) in the superposed PWM signal (PWMj) trail in time in the phase angle.

6. The method as set forth in one of the preceding claims, **characterized in that** the arithmetic mean of the superposed PWM signal (PWMj) corresponds to the arithmetic mean of the PWM signal (PWM).

7. The method as set forth in one of the preceding claims, **characterized in that** the period of the superposed PWM signal (PWMj) corresponds to the period of the PWM signal (PWM).

8. The method as set forth in one of the preceding claims, **characterized in that** the duty cycle of the PWM signal (PWM) is greater than 0% and less than 100%.

9. The method as set forth in one of the preceding claims, **characterized in that** a checksum of the binary parameterization protocol is determined from the superposed PWM signal (PWMj) and is compared with a checksum target.

10. The method as set forth in one of the preceding claims, **characterized in that** the PWM signal (PWM) is recalibrated at regular, defined intervals.

## Revendications

1. Procédé permettant de transmettre aussi bien des valeurs de consigne (S) au moyen de signaux de valeur de consigne que des valeurs de paramétrage (P) au moyen de signaux de paramétrage pour paramétrer un moteur électrique, par le biais d'une seule et même interface (1) d'une commande de moteur (2),
**caractérisé en ce qu'**un signal à modulation d'impulsions en durée (PWM) représentant une valeur de consigne est superposé au moyen d'une gigue de phase, et le signal PWM superposé avec la gigue de phase (PWMj) est amené à la commande de moteur (2) par un étage d'entrée de l'interface (1), la moyenne arithmétique du signal PMW superposé (PWMj) correspondant à la valeur de consigne (S).

2. Procédé selon la revendication 1, **caractérisé en ce que** la relation de phase du signal PWM superposé (PWMj) est modifiée par rapport à la relation de phase du signal PWM (PWM).

3. Procédé selon la revendication 1 ou 2, **caractérisé en ce qu'**un protocole de paramétrage binaire est utilisé pour le paramétrage du moteur électrique, et les valeurs binaires « 0 » et « 1 » de ce protocole sont réalisées au moyen de la gigue de phase **en ce que** la relation de phase du signal PWM superposé (PWMj) est influencée de telle sorte que la relation de phase est détectée à l'étage d'entrée soit comme « 0 », soit comme « 1 ».

4. Procédé selon la revendication 3, dans lequel le protocole de paramétrage binaire pour le paramétrage binaire est réalisé en ce qu'un flanc en avance de phase dans le temps d'une impulsion (U_{PWM}) du signal PWM superposé (PWMj) par rapport à un signal de valeur de consigne inchangé est détecté comme une valeur « 0 », alors qu'un flanc en retard de phase dans le temps d'une impulsion (U_{PWM}) du signal PWM superposé (PWMj) est détecté comme une valeur « 1 ».

5. Procédé selon la revendication 4, dans lequel un certain nombre d'impulsions n (U_{PWM}) dans le signal PWM superposé (PWMj) est en avance de phase dans le temps, alors qu'un certain nombre d'impulsions n' (U_{PWM}) dans le signal PWM superposé (PWMj) est en retard de phase dans le temps.

6. Procédé selon l'une quelconque des revendications précédentes, **caractérisé en ce que** la moyenne arithmétique du signal PWM superposé (PWMj) coïncide avec la moyenne arithmétique du signal PWM (PWM).

7. Procédé selon l'une quelconque des revendications précédentes, **caractérisé en ce que** la durée de période du signal PWM superposé (PWMj) coïncide avec la durée de période du signal PWM (PWM).

8. Procédé selon l'une quelconque des revendications précédentes, **caractérisé en ce que** le rapport cyclique du signal PWM (PWM) est supérieur à 0 % et inférieur à 100%.

9. Procédé selon l'une quelconque des revendications précédentes, **caractérisé en ce qu'**une somme de contrôle du protocole de paramétrage binaire est déterminée à partir du signal PWM superposé (PWMj) et comparée à une valeur de consigne de somme de contrôle.

10. Procédé selon l'une quelconque des revendications précédentes, **caractérisé en ce que** le signal PWM (PWM) est recalibré à intervalle définis réguliers.
